# DEMANDE DE BREVET EUROPEEN

(11) **EP 3 606 113 A1**
(43) Date de publication de la demande: **05.02.2020**
(21) Numéro de dépôt: 19189584.6
(22) Date de dépôt: 01.08.2019
(51) Int. Cl.: H04W 4/90, H04W 4/14, H04W 4/02, H04W 52/02, G08B 25/00, G08B 25/01, H04M 1/73, H04M 1/725, G08B 25/10, G08B 21/02, G08B 21/04, G08B 21/18

(54) **DISPOSITIF D'AVERTISSEMENT DE DETRESSE COMPRENANT UN SYSTÈME DE GESTION DE BATTERIE**

(30) Priorité: 01.08.2018 FR 1870892
(71) Demandeur: Horizon Telecom, 71300 Montceau-les-Mines (FR)
(72) Inventeur: GALLO, Guiseppe, 71710 Les BIZOTS (FR)
(74) Mandataire: Cabinet Chaillot

(57) **Abrégé**

L'invention a pour objet un dispositif d'avertissement de détresse (1) comprenant une batterie (2), un bouton de détresse (3) et un module de communication à distance (4) configuré pour émettre un avertissement de détresse lors d'un appui sur le bouton de détresse (3), caractérisé par le fait que le dispositif d'avertissement de détresse (1) comprend en outre un système de gestion de batterie comprenant un dispositif de commande (5), configuré pour détecter un appui sur le bouton de détresse (3), et un commutateur de module de communication à distance (6) disposé entre la batterie (2) et le module de communication à distance (4) et commandé par le dispositif de commande (5) de telle sorte que le dispositif de commande (5) ferme le commutateur de module de communication à distance (6) lorsqu'il détecte un appui sur le bouton de détresse (3).

## Description

La présente invention concerne le domaine des dispositifs d'avertissement de détresse, et porte en particulier sur un dispositif d'avertissement de détresse comprenant un système de gestion de batterie.

Il existe sur le marché grand public de nombreux fabricants de dispositifs d'avertissement de détresse, également appelés « boutons d'appel de détresse », qui permettent d'envoyer un appel de détresse vers au moins un numéro de téléphone prédéfini lorsque la personne détenant le dispositif d'avertissement de détresse est en détresse, ladite personne devant appuyer sur un bouton poussoir lorsqu'elle se trouve dans une situation de danger ou de détresse, telle qu'un malaise, une chute ou la sensation d'être perdue, l'appui sur le bouton poussoir déclenchant un appel de détresse, par exemple en mode vocal, par l'intermédiaire d'un réseau de système mondial de communication avec les mobiles (GSM), ce qui permet de mettre en sécurité des personnes vulnérables telles que des enfants ou des personnes âgées.

Ces dispositifs existants sont connectés en permanence sur le réseau GSM et, malgré la présence de batteries rechargeables typiquement de plus de 500 mAh, l'autonomie de ces dispositifs existants est limitée. En effet, le module GSM de ces dispositifs existants est très gourmand en énergie et dispose d'un courant de repos élevé compris entre 5 et 10 mA. Ces dispositifs existants disposent ainsi d'une autonomie réduite, typiquement de trois à cinq jours, ce qui empêche une utilisation sûre de ces dispositifs d'avertissement de détresse en cas d'oubli du rechargement de la batterie par l'utilisateur.

La présente invention vise à résoudre les inconvénients de l'état antérieur de la technique, en proposant un dispositif d'avertissement de détresse comprenant un système de gestion de batterie, de manière à améliorer l'autonomie du dispositif d'avertissement de détresse.

La présente invention a donc pour objet un dispositif d'avertissement de détresse comprenant une batterie, un bouton de détresse et un module de communication à distance alimenté par la batterie et configuré pour émettre un avertissement de détresse lors d'un appui sur le bouton de détresse, caractérisé par le fait que le dispositif d'avertissement de détresse comprend en outre un système de gestion de batterie relié à la batterie et au bouton de détresse, ledit système de gestion de batterie comprenant un dispositif de commande, configuré pour détecter un appui sur le bouton de détresse, et un commutateur de module de communication à distance disposé entre la batterie et le module de communication à distance, ledit commutateur de module de communication à distance étant commandé par le dispositif de commande de telle sorte que le dispositif de commande ferme le commutateur de module de communication à distance pendant une durée prédéfinie lorsqu'il détecte un appui sur le bouton de détresse.

Ainsi, la fermeture du commutateur de module de communication à distance entraînant l'alimentation du module de communication à distance par la batterie, le système de gestion de batterie permet d'améliorer l'autonomie du dispositif d'avertissement de détresse, puisque lorsque le commutateur de module de communication à distance est ouvert, la batterie n'alimente pas le module de communication à distance.

Le module de communication à distance, qui est gourmand en énergie même lorsque celui-ci est au repos, n'est pas alimenté en permanence afin d'accroître l'autonomie du dispositif d'avertissement de détresse, le module de communication à distance étant uniquement alimenté en puissance lorsqu'il est utile pour permettre la transmission d'un appel de détresse.

Le dispositif de commande du système de gestion de batterie ferme ou ouvre le commutateur de module de communication à distance pour alimenter ou non le module de communication à distance du dispositif d'avertissement de détresse, ce qui permet de gérer la distribution de l'énergie de la batterie en fonction des modes de réveil.

Le commutateur de module de communication à distance permet d'ouvrir la liaison entre la batterie et le module de communication à distance lorsque le module de communication à distance n'est pas utilisé, de manière à rendre nul le courant de repos du module de communication à distance.

Le commutateur de module de communication à distance est un interrupteur électronique tel qu'un interrupteur électronique réalisé à l'aide d'un transistor à effet de champ (FET) (par exemple, le transistor BSS138 de la société ON Semiconductor®).

La durée prédéfinie pendant laquelle le module de communication à distance est alimenté après une détection d'appui sur le bouton de détresse doit être suffisante pour permettre la transmission d'un appel de détresse par le module de communication à distance. Elle peut, par exemple, être comprise entre 20 et 60 secondes.

Le dispositif d'avertissement de détresse selon la présente invention possède ainsi une grande autonomie entre deux recharges de la batterie, typiquement entre 6 et 18 mois.

La batterie, le module de communication à distance et le système de gestion de batterie sont disposés à l'intérieur d'un boîtier, le bouton de détresse, de préférence de type bouton poussoir, étant disposé sur l'une des faces du boîtier de manière à être facilement accessible par l'utilisateur en cas de détresse.

Le boîtier possède une taille relativement petite, avec des dimensions de préférence inférieures à 45 x 45 x 16 mm.

Selon une caractéristique particulière de l'invention, le dispositif de commande du système de gestion de batterie est un microcontrôleur à très faible consommation.

Ainsi, l'autonomie du dispositif d'avertissement de détresse est davantage améliorée.

Le microcontrôleur à très faible consommation peut, par exemple, avoir un courant moyen de fonctionnement inférieur ou égal à 5 µA.

Le microcontrôleur à très faible consommation peut être l'un parmi les microcontrôleurs des familles CORTEX M Core (par exemple, la famille de microcontrôleurs LPC11xx de la société NXP Semiconductors).

A titre d'exemple, en tenant compte des courants de fuite en général sur la plupart des modules isolés d'un point de vue électrique (10 µA au maximum), on obtient un courant de repos maximal de 20 µA pour le dispositif d'avertissement de détresse selon la présente invention. De ce fait, le courant de repos passe de 5 mA (pour un dispositif d'avertissement de détresse existant) à 20 µA et, dans le cas de l'utilisation d'une batterie de 350 mAh, l'autonomie avec les solutions existantes est de 70 heures maximum, tandis qu'elle est de 12 000 heures avec le dispositif d'avertissement de détresse selon la présente invention. Si on considère une communication vocale de 20 minutes avec 240 mA de consommation, on obtient environ 40 heures d'autonomie avec les solutions existantes, et 8 000 heures (soit près d'un an) pour la solution selon la présente invention.

Selon une caractéristique particulière de l'invention, le module de communication à distance est un module de système mondial de communication avec les mobiles, GSM.

Ainsi, le module GSM permet de réaliser un appel vocal vers au moins un numéro de téléphone prédéfini et/ou d'envoyer au moins un message court (SMS) à au moins un numéro de téléphone prédéfini.

Le module GSM, qui est très énergivore, est alimenté en puissance pendant la durée prédéfinie lorsque le système de gestion de batterie détecte un appui sur le bouton de détresse. D'autres modules de communication à distance que le GSM peuvent être envisagés dans le cadre de la présente invention.

Selon une caractéristique particulière de l'invention, le dispositif d'avertissement de détresse comprend en outre un module de système mondial de localisation, GPS, alimenté par la batterie, et un commutateur de module GPS disposé entre la batterie et le module GPS, ledit commutateur de module GPS étant commandé par le dispositif de commande du système de gestion de batterie de telle sorte que le dispositif de commande ferme le commutateur de module GPS pendant une durée prédéfinie lorsqu'il détecte un appui sur le bouton de détresse.

Ainsi, le module GPS, qui est également un module gourmand en énergie, n'est pas alimenté en permanence afin d'accroître davantage l'autonomie du dispositif d'avertissement de détresse. Le module GPS est alimenté en puissance, par fermeture du commutateur de module GPS lors d'une détection d'appui sur le bouton de détresse, lorsqu'il est utile pour déterminer les coordonnées spatiales du dispositif d'avertissement de détresse de manière à les transmettre lors de l'appel de détresse. D'autres systèmes de localisation mondiaux que le système GPS (Galileo, Glonass) peuvent être envisagés dans le cadre de la présente invention.

Selon une caractéristique particulière de l'invention, le dispositif d'avertissement de détresse comprend en outre un module d'accéléromètre alimenté par la batterie et un commutateur de module d'accéléromètre disposé entre la batterie et le module d'accéléromètre, ledit commutateur de module d'accéléromètre étant commandé par le dispositif de commande du système de gestion de batterie.

Ainsi, le module d'accéléromètre permet, par exemple, de détecter une chute, une perte de verticalité ou une absence de mouvement de l'utilisateur portant le dispositif d'avertissement de détresse.

Le commutateur de module d'accéléromètre permet de couper l'alimentation du module d'accéléromètre lorsque le dispositif de commande du système de gestion de batterie le décide.

Selon une caractéristique particulière de l'invention, le module de communication à distance est en outre configuré pour émettre un avertissement de détresse lors de la détection, par le module d'accéléromètre, d'une accélération dépassant un seuil prédéterminé, le commutateur de module de communication à distance étant, dans ce cas, fermé pendant une durée prédéfinie par le dispositif de commande du système de gestion de batterie.

Ainsi, lorsque le module d'accéléromètre détecte une valeur d'accélération anormale, correspondant par exemple à celle d'une chute de l'utilisateur, le module de communication à distance est alimenté en puissance pendant la durée prédéfinie de manière à permettre l'envoi d'un avertissement de détresse indiquant une accélération anormale.

Un tel dispositif d'avertissement de détresse peut, par exemple, être utilisé dans l'habitacle d'un véhicule pour lancer un appel de détresse en cas de choc violent, sur des deux-roues pour lancer un appel de détresse en cas d'accident, ou par des randonneurs, des alpinistes, des skieurs, des navigateurs ou des plaisanciers pour lancer un appel de détresse.

Selon une caractéristique particulière de l'invention, le dispositif d'avertissement de détresse comprend en outre un régulateur de tension à très faible consommation disposé entre la batterie et le dispositif de commande du système de gestion de batterie.

Ainsi, le régulateur de tension à très faible consommation possède un très faible courant de fonctionnement, par exemple inférieur ou égal à 5 µA, de manière à accroître davantage l'autonomie du dispositif d'avertissement de détresse.

Le régulateur de tension permet de fournir au dispositif de commande du système de gestion de batterie une tension régulée à partir de la tension fournie par la batterie.

Le régulateur de tension à très faible consommation peut, par exemple, être un régulateur de la série R1180x de la société RICOH.

Selon une caractéristique particulière de l'invention, la batterie est une batterie rechargeable, le dispositif d'avertissement de détresse comprenant en outre un circuit de recharge de batterie relié à la batterie rechargeable.

Ainsi, lorsque le niveau de la batterie devient faible, l'utilisateur peut recharger la batterie du dispositif d'avertissement de détresse par l'intermédiaire du circuit de recharge de batterie, de manière à continuer à utiliser le dispositif d'avertissement de détresse.

Selon une caractéristique particulière de l'invention, le module de communication à distance comprend une antenne d'émission-réception, un microphone et un haut-parleur.

Ainsi, l'antenne d'émission-réception permet d'émettre et recevoir des signaux de manière sans fil, le microphone et le haut-parleur permettant à l'utilisateur de communiquer avec une personne à distance lors d'un appel de détresse de type vocal.

Selon une caractéristique particulière de l'invention, le dispositif d'avertissement de détresse comprend en outre au moins un voyant, de préférence de type diode électroluminescente, DEL, relié au dispositif de commande du système de gestion de batterie.

Ainsi, l'au moins un voyant permet d'indiquer à l'utilisateur au moins un état de fonctionnement du dispositif d'avertissement de détresse, tel qu'un état de batterie déchargée, un état de batterie chargée et/ou un état d'appel de détresse.

Selon une caractéristique particulière de l'invention, l'avertissement de détresse émis par le module de communication à distance est au moins l'un parmi un message court, SMS, indiquant le cas échéant les coordonnées mesurées par le module GPS, envoyé à au moins un numéro prédéterminé et un appel vocal d'au moins un numéro prédéterminé.

L'appel vocal est, de préférence, limité à 20 minutes par appel entre chaque recharge de la batterie du dispositif d'avertissement de détresse.

Selon une caractéristique particulière de l'invention, le module de communication à distance est en outre configuré pour émettre des informations de fonctionnement correct à des intervalles de temps prédéterminés, le commutateur de module de communication à distance étant, dans ce cas, fermé pendant une durée prédéfinie à chaque intervalle de temps prédéterminé.

Ainsi, les coordonnées GPS du dispositif d'avertissement de détresse peuvent, par exemple, être envoyées dans chaque avertissement de détresse émis de manière à suivre le déplacement de l'utilisateur au cours du temps.

Les intervalles de temps prédéterminés sont, de préférence, définis à l'aide de l'horloge du module GPS.

Pour mieux illustrer l'objet de la présente invention, on va en décrire ci-après, à titre illustratif et non limitatif, un mode de réalisation préféré, avec référence au dessin annexé.

Sur ce dessin :

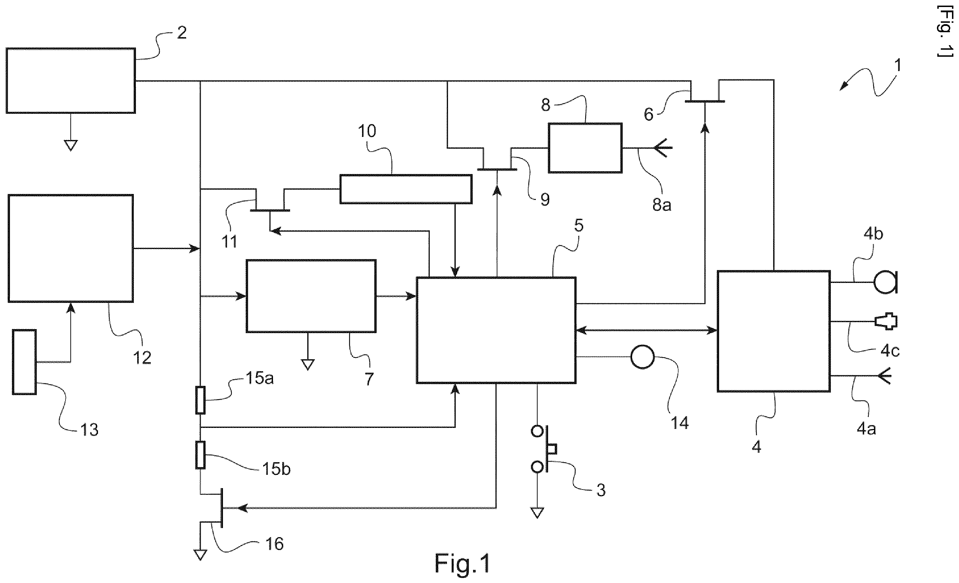

[Fig. 1] est un schéma fonctionnel d'un dispositif d'avertissement de détresse selon la présente invention.

Si l'on se réfère à la Figure 1, on peut voir qu'il y est représenté un dispositif d'avertissement de détresse 1 selon la présente invention.

Le dispositif d'avertissement de détresse 1 comprend une batterie 2 configurée pour alimenter en puissance les différents modules du dispositif d'avertissement de détresse 1 qui seront décrits par la suite.

Le dispositif d'avertissement de détresse 1 comprend en outre un bouton de détresse 3 de type bouton poussoir et un module de communication à distance 4 alimenté par la batterie 2 et configuré pour émettre un avertissement de détresse lors d'un appui par l'utilisateur sur le bouton de détresse 3.

Le module de communication à distance 4 est un module de système mondial de communication avec les mobiles (GSM) permettant de réaliser un appel vocal vers au moins un numéro de téléphone prédéfini et/ou d'envoyer au moins un message court (SMS) à au moins un numéro de téléphone prédéfini.

Le module de communication à distance 4 comprend une antenne d'émission-réception 4a, un microphone 4b et un haut-parleur 4c, l'antenne d'émission-réception 4a permet d'émettre et recevoir des signaux de manière sans fil, le microphone 4b et le haut-parleur 4c permettant à l'utilisateur de communiquer avec une personne à distance lors d'un appel de détresse de type vocal.

Le dispositif d'avertissement de détresse 1 comprend en outre un dispositif de commande 5 relié au module de communication à distance 4 et au bouton de détresse 3.

Le dispositif d'avertissement de détresse 1 comprend en outre un commutateur de module de communication à distance 6 disposé entre la batterie 2 et l'entrée d'alimentation du module de communication à distance 4, ledit commutateur de module de communication à distance 6 étant commandé par le dispositif de commande 5.

Le dispositif de commande 5 est configuré pour détecter un appui sur le bouton de détresse 3 et pour fermer le commutateur de module de communication à distance 6 pendant une durée prédéfinie lorsqu'il détecte un appui sur le bouton de détresse 3.

Le module de communication à distance GSM 4, qui est gourmand en énergie même lorsque celui-ci est au repos, n'est ainsi pas alimenté en permanence afin d'accroître l'autonomie du dispositif d'avertissement de détresse 1, le module de communication à distance 4 étant uniquement alimenté en puissance lorsqu'il est utile pour permettre la transmission d'un appel de détresse.

Le commutateur de module de communication à distance 6 permet d'ouvrir la liaison entre la batterie 2 et l'entrée d'alimentation du module de communication à distance 4 lorsque le module de communication à distance 4 n'est pas utilisé, de manière à rendre nul le courant de repos du module de communication à distance 4.

La durée prédéfinie pendant laquelle le module de communication à distance 4 est alimenté après une détection d'appui sur le bouton de détresse 3 doit être suffisante pour permettre la transmission d'un appel de détresse par le module de communication à distance 4. Elle peut, par exemple, être comprise entre 20 et 60 secondes.

Le dispositif de commande 5 est un microcontrôleur à très faible consommation ayant un courant moyen de fonctionnement inférieur ou égal à 5 µA, tel que l'un des microcontrôleurs des familles CORTEX M Core (par exemple, la famille de microcontrôleurs LPC11xx de la société NXP Semiconductors).

Le dispositif de commande 5 est relié à la batterie 2 par l'intermédiaire d'un régulateur de tension à très faible consommation 7 qui est configuré pour fournir au dispositif de commande 5 une tension régulée à partir de la tension fournie par la batterie 2.

Le régulateur de tension à très faible consommation 7 possède un très faible courant de fonctionnement, par exemple inférieur ou égal à 5 µA.

Le dispositif d'avertissement de détresse 1 comprend en outre un module de système mondial de localisation (GPS) 8 et un commutateur de module GPS 9 disposé entre la batterie 2 et l'entrée d'alimentation du module GPS 8, ledit commutateur de module GPS 9 étant commandé par le dispositif de commande 5 de telle sorte que le dispositif de commande 5 ferme également le commutateur de module GPS 9 pendant une durée prédéfinie lorsqu'il détecte un appui sur le bouton de détresse 3.

Ainsi, le module GPS 8, qui est également un module gourmand en énergie, n'est pas alimenté en permanence afin d'accroître davantage l'autonomie du dispositif d'avertissement de détresse 1. Le module GPS 8 est alimenté en puissance, par fermeture du commutateur de module GPS 9 lors d'une détection d'appui sur le bouton de détresse 3, lorsqu'il est utile pour déterminer les coordonnées GPS du dispositif d'avertissement de détresse 1, à l'aide d'une antenne GPS 8a, de manière à ensuite les transmettre lors de l'avertissement de détresse émis par le module de communication à distance 4.

Le dispositif d'avertissement de détresse 1 comprend en outre un module d'accéléromètre 10 et un commutateur de module d'accéléromètre 11 disposé entre la batterie 2 et l'entrée d'alimentation du module d'accéléromètre 10, la sortie du module d'accéléromètre 10 étant reliée au dispositif de commande 5, et le commutateur de module d'accéléromètre 11 étant commandé par le dispositif de commande 5.

Le commutateur de module d'accéléromètre 11 permet de couper l'alimentation du module d'accéléromètre 10 lorsque le dispositif de commande 5 le lui ordonne.

Le dispositif de commande 5 est en outre configuré pour commander la fermeture du commutateur de module de communication à distance 6 pendant la durée prédéfinie lorsque le module d'accéléromètre 10 détecte une accélération dépassant un seuil prédéterminé (correspondant par exemple à une chute de l'utilisateur ou à un choc subi par l'utilisateur), de manière à permettre l'envoi d'un avertissement de détresse par le module de communication à distance 4.

Le dispositif d'avertissement de détresse 1 peut, par exemple, être utilisé dans l'habitacle d'un véhicule pour lancer un appel de détresse en cas de choc violent, sur des deux-roues pour lancer un appel de détresse en cas d'accident, ou par des randonneurs, des alpinistes, des skieurs, des navigateurs ou des plaisanciers pour lancer un appel de détresse.

La batterie 2 est une batterie rechargeable par l'intermédiaire d'un circuit de recharge de batterie 12 relié à la batterie 2, ledit circuit de recharge de batterie 12 étant relié à un connecteur de recharge de batterie 13 tel qu'un connecteur USB ou micro USB.

Lorsque le niveau de la batterie 2 devient faible, l'utilisateur peut ainsi recharger la batterie 2 du dispositif d'avertissement de détresse 1 de manière à continuer à utiliser le dispositif d'avertissement de détresse 1 après recharge.

Le dispositif d'avertissement de détresse 1 comprend en outre un voyant 14 de type diode électroluminescente (DEL) relié au dispositif de commande 5, le voyant 14 permettant d'indiquer à l'utilisateur un état de fonctionnement du dispositif d'avertissement de détresse 1 au moins parmi un état de batterie déchargée, un état de batterie chargée et un état d'appel de détresse, en fonction de la couleur du voyant 14.

Le module de communication à distance 4 pourrait également être configuré pour émettre des informations de fonctionnement correct à des intervalles de temps prédéterminés, le commutateur de module de communication à distance 6 et le commutateur de module GPS 9 étant, dans ce cas, fermés par le dispositif de commande 5 pendant une durée prédéfinie à chaque intervalle de temps prédéterminé. Les coordonnées GPS du dispositif d'avertissement de détresse 1 peuvent ainsi être envoyées dans chaque avertissement de détresse émis de manière à suivre le déplacement de l'utilisateur au cours du temps, les intervalles de temps prédéterminés étant définis à l'aide de l'horloge du module GPS. 8

Le dispositif d'avertissement de détresse 1 comprend en outre un pont de résistances comprenant deux résistances 15a et 15b en série, ledit pont de résistances étant relié à la batterie 2. Le point de connexion entre les deux résistances 15a et 15b est relié au dispositif de commande 5, de telle sorte que le dispositif de commande 5 est configuré pour mesurer la tension de la batterie 2 en fonction de la tension mesurée au niveau dudit point de connexion.

Le dispositif d'avertissement de détresse 1 comprend en outre un commutateur d'alimentation générale 16 disposé entre la résistance 15b du pont de résistances et la masse du circuit, et commandé par le dispositif de commande 5. L'ouverture du commutateur d'alimentation générale 16 par le dispositif de commande 5 permet de couper l'alimentation générale du dispositif d'avertissement de détresse 1.

Chacun des commutateurs 6, 9, 11 et 16 du dispositif d'avertissement de détresse 1 est un interrupteur électronique réalisé à l'aide d'un transistor FET (par exemple, le transistor BSS138 de la société ON Semiconductor®).

## Revendications

1. [Dispositif d'avertissement de détresse (1) comprenant une batterie (2), un bouton de détresse (3) et un module de communication à distance (4) alimenté par la batterie (2) et configuré pour émettre un avertissement de détresse lors d'un appui sur le bouton de détresse (3), **caractérisé par le fait que** le dispositif d'avertissement de détresse (1) comprend en outre un système de gestion de batterie relié à la batterie (2) et au bouton de détresse (3), ledit système de gestion de batterie comprenant un dispositif de commande (5), configuré pour détecter un appui sur le bouton de détresse (3), et un commutateur de module de communication à distance (6) disposé entre la batterie (2) et le module de communication à distance (4), ledit commutateur de module de communication à distance (6) étant commandé par le dispositif de commande (5) de telle sorte que le dispositif de commande (5) ferme le commutateur de module de communication à distance (6) pendant une durée prédéfinie lorsqu'il détecte un appui sur le bouton de détresse (3).

2. Dispositif d'avertissement de détresse (1) selon la revendication 1, **caractérisé par le fait que** le dispositif de commande (5) du système de gestion de batterie est un microcontrôleur à très faible consommation.

3. Dispositif d'avertissement de détresse (1) selon la revendication 1 ou la revendication 2, **caractérisé par le fait que** le module de communication à distance (4) est un module de système mondial de communication avec les mobiles, GSM.

4. Dispositif d'avertissement de détresse (1) selon l'une des revendications 1 à 3, **caractérisé par le fait que** le dispositif d'avertissement de détresse (1) comprend en outre un module de système mondial de localisation, GPS, (8) alimenté par la batterie (2), et un commutateur de module GPS (9) disposé entre la batterie (2) et le module GPS (8), ledit commutateur de module GPS (9) étant commandé par le dispositif de commande (5) du système de gestion de batterie de telle sorte que le dispositif de commande (5) ferme le commutateur de module GPS (9) pendant une durée prédéfinie lorsqu'il détecte un appui sur le bouton de détresse (3).

5. Dispositif d'avertissement de détresse (1) selon l'une des revendications 1 à 4, **caractérisé par le fait que** le dispositif d'avertissement de détresse (1) comprend en outre un module d'accéléromètre (10) alimenté par la batterie (2) et un commutateur de module d'accéléromètre (11) disposé entre la batterie (2) et le module d'accéléromètre (10), ledit commutateur de module d'accéléromètre (11) étant commandé par le dispositif de commande (5) du système de gestion de batterie.

6. Dispositif d'avertissement de détresse (1) selon la revendication 5, **caractérisé par le fait que** le module de communication à distance (4) est en outre configuré pour émettre un avertissement de détresse lors de la détection, par le module d'accéléromètre (10), d'une accélération dépassant un seuil prédéterminé, le commutateur de module de communication à distance (11) étant, dans ce cas, fermé pendant une durée prédéfinie par le dispositif de commande (5) du système de gestion de batterie.

7. Dispositif d'avertissement de détresse (1) selon l'une des revendications 1 à 6, **caractérisé par le fait que** le dispositif d'avertissement de détresse (1) comprend en outre un régulateur de tension à très faible consommation (7) disposé entre la batterie (2) et le dispositif de commande (5) du système de gestion de batterie.

8. Dispositif d'avertissement de détresse (1) selon l'une des revendications 1 à 7, **caractérisé par le fait que** la batterie (2) est une batterie rechargeable, le dispositif d'avertissement de détresse (1) comprenant en outre un circuit de recharge de batterie (12) relié à la batterie (2) rechargeable.

9. Dispositif d'avertissement de détresse (1) selon l'une des revendications 1 à 8, **caractérisé par le fait que** le module de communication à distance (4) comprend une antenne d'émission-réception (4a), un microphone (4b) et un haut-parleur (4c).

10. Dispositif d'avertissement de détresse (1) selon l'une des revendications 1 à 9, **caractérisé par le fait que** le dispositif d'avertissement de détresse (1) comprend en outre au moins un voyant (14), de préférence de type diode électroluminescente, DEL, relié au dispositif de commande (5) du système de gestion de batterie.

11. Dispositif d'avertissement de détresse (1) selon l'une des revendications 1 à 10, **caractérisé par le fait que** l'avertissement de détresse émis par le module de communication à distance (4) est au moins l'un parmi un message court, SMS, indiquant le cas échéant les coordonnées mesurées par le module GPS (8), envoyé à au moins un numéro prédéterminé et un appel vocal d'au moins un numéro prédéterminé.

12. Dispositif d'avertissement de détresse (1) selon l'une des revendications 1 à 11, **caractérisé par le fait que** le module de communication à distance (4) est en outre configuré pour émettre des informations de fonctionnement correct à des intervalles de temps prédéterminés, le commutateur de module de communication à distance (6) étant, dans ce cas, fermé pendant une durée prédéfinie à chaque intervalle de temps prédéterminé.
